# EUROPEAN PATENT SPECIFICATION

(11) **EP 2 573 720 B1**
(45) Date of publication and mention of the grant of the patent: **09.03.2016**
(21) Application number: 11182591.5
(22) Date of filing: 23.09.2011
(51) Int. Cl.: G06Q 10/10, G06Q 30/06, G06Q 50/30

(54) **Method and system for sharing of transportation means**
Verfahren und System zur gemeinsamen Nutzung von Transportmitteln
Procédé et système pour partager un moyen de transport

(43) Date of publication of application: 27.03.2013
(73) Proprietor: Sharoo AG, 8006 Zürich (CH)
(72) Inventor: Straatman, Joris, 8006 Zürich (CH); Chatzimichalis, Kosmas, 8184 Bachenbülach (CH); Friedli, Andres, 8008 Zürich (CH); Gysin, Benjamin, 8620 Wetzikon (CH); Bührer, Adrian T., 8004 Zürich (CH)
(74) Representative: Liebetanz, Michael

(56) References cited:
- EP-A1- 1 398 719
- WO-A1-02/089077
- WO-A1-2011/053357
- JP-A- 2010 122 988
- US-B1- 7 366 677

## Description

### TECHNICAL FIELD

The present invention relates to a method and a system for sharing transportation means, e.g. cars, motorcycles or bicycles, among a plurality of users.

### PRIOR ART

US 2010/0114624 presents a method and a system for car sharing among a plurality of commuters having a common starting location. The aim of the invention is to facilitate the car pooling among people having the same way.

JP2010/231258 provides a patent application for a car sharing system attending the problem that electric cars are not readily available after being used by a user, since the car needs to be recharged during a specific time.

JP 2010/237842 provides a solution for a car sharing system, capable of opening and closing a door by a plurality of means. The document has identified the problem that it might not be sufficient to provide a cellular phone as means for opening the door of a car and to start the engine, since at the end of the journey of the user it might well be the case, that the battery of the cellular phone which was used to open the door is no longer charged. Therefore it is suggested that an alternative element is provided, being the machine readable driver's license which is read by a reader in the car locking the car.

JP 2010/122988 provides a method to improve availability of cars within a car sharing system by allowing a user to grasp the location of the vehicle after its use. The location of a vehicle being not in use is transmitted wirelessly to a car sharing server which distributes this information to mobile terminals of potential users of the car.

US 5,917,407 provides a bicycle rental system, wherein a bank or credit card unlocks a specific bicycle and also locks it upon return at the same or another station.

EP 0 985 596 discloses a locking system wherein a card reader on a vehicle body is adapted to read information from an ID card of a user having previously stored identification information for permitting use of the vehicle. Furthermore the vehicle comprises an electric actuator for locking and unlocking the vehicle for permitting use of the vehicle.

EP 1 382 519 discloses a bicycle rental system with a station wherein the bicycles can be used away after having paid for opening a lock upon presentation of a payment means as a card and wherein the bicycles comprise a geolocation means for supervising their location.

WO 2011/053357 A1 discloses a vehicle access control system according to the preamble of claim 1.

### SUMMARY OF THE INVENTION

Based on this prior art, it is an object of the present invention to improve a method and a system for sharing transportation means, and enabling owners of such a transportation means to readily add their transportation means into the pool of transportation means.
It is a further object of the invention to incite owners of transportation means to share the use of such means with other users through a simplified technical approach of communication.

These objects are reached with a method and a system according to the invention of claim 1.

A method for sharing transportation means, e.g. cars, motorcycles or bicycles, among a plurality of users, comprises the steps of providing an electronic control unit, comprising a database of providers of vehicles, a database of said vehicles comprising database fields for a plurality of time schedule data for each vehicle and a database of users, providing a plurality of protective access units provided in connection with each of the vehicles, and providing a plurality of mobile communication devices, wherein each mobile communication device is associated with a user from the plurality of user. Upon request of a user for use of one of the vehicles a request of said user for use of one of the vehicles is transmitted, directly or via a mobile communication device, to the electronic control unit, then the user, his mobile communication device, the requested vehicle and the corresponding security device are identified in the databases of the electronic control unit. The electronic control unit generates a message which is comprised of three layers for unique identification of the sender and receive: Layer 1 is the server signed message depicting timeslot information and vehicle identification data; Layer 2 is the encapsulation of the Layer 1 message inside the vehicle's protective access unit's public key; Layer 3 is the encapsulation of the Layer 2 message in the communication device's public key. This message is sent to the user's communication device where the Layer 2 message is abstracted from the message by means of the communication device's private key. The Layer 2 message is transmitted to the vehicle's protective access unit upon approaching this vehicle upon which the vehicle's protective access unit will abstract the Layer 1 message by decryption of the Layer 2 message with the vehicle's protective access unit's private key. The vehicle's protective access unit will verify authenticity of the Layer 1 message originating from the electronic control unit by using the electronic control unit's public key to verify the Layer 1 signature. If the result is affirmative the vehicle's protective access unit opens, unlocks and/or starts the vehicle for use.

It is an advantage of such a system that identification of user and vehicle can be made without vehicle having a connection to the electronic control unit and without the vehicle having a record of the scheduling or of the user's and/or user's communication device.

It is an advantage of such a system, that it improves the number of available transportation means at a given place, especially in places where parking opportunities are rare.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows the major communication lines within a system according to the invention
- Fig. 2: shows a registration sequence block diagram of the system
- Fig. 3: shows an authentication transmission block diagram;
- Fig. 4: shows a flow chart for the registration of a partner;
- Fig. 5: shows a flow chart for the registration of a user; and
- Fig. 6: shows a flow chart for the schedule of vehicles.

### DESCRIPTION OF PREFERRED EMBODIMENTS

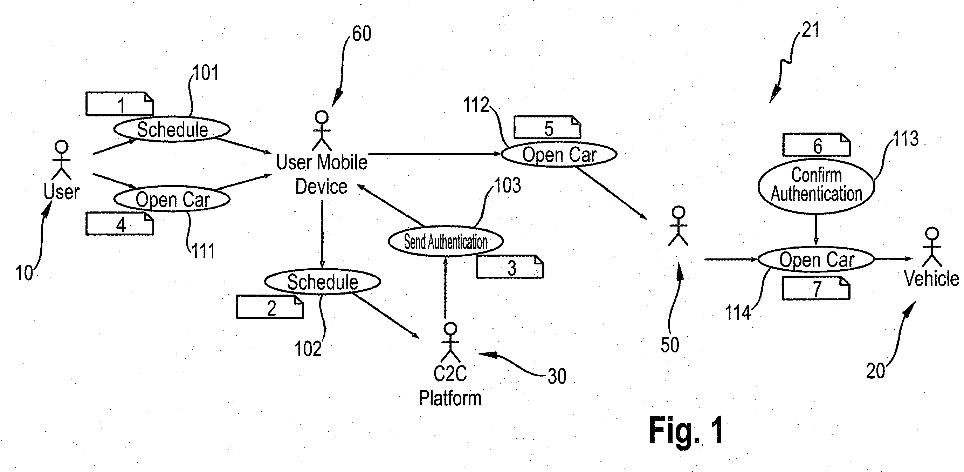

Fig. 1 shows the use case of the system according to an embodiment of the invention. User 10 is interested to use vehicle 20. Vehicle 20 can be a car, a motorcycle, a bicycle, a boat or any other transportation means and is represented in Fig. 1 by the usual standard representation within an UML diagram, being a stick-figure. Said transportation means 20 is protected with a device 21 against impropriate use. Such a device 21 can be a chain with a lock for a bicycle or a motorcycle to attach it at a specific place, it can also comprise a lock within a door of a car to open it or it can be connected to the starter motor or the relevant electronic control unit to avoid unauthorized starting of the engine of the transportation means. In case that the transportation means 20 is motorized usually a second layer of protection 21 is provided by such an additional lock for starting the related engine. In the present embodiment the device 21 comprises a protective unit 50.

The vehicle 20 is registered with a sharing platform 30, comprising a database of vehicles to be shared. Furthermore, the sharing platform 30 also comprises two additional databases for so called partners 40 and users 10. Partners 40 are defined to be persons providing one or more vehicles to be included into the database and to be shared. Users 10 are defined as persons who are interested to use a vehicle 20 registered with the sharing platform 30. Of course users 10 may be partners 40 and partners 40 may act as users 10.

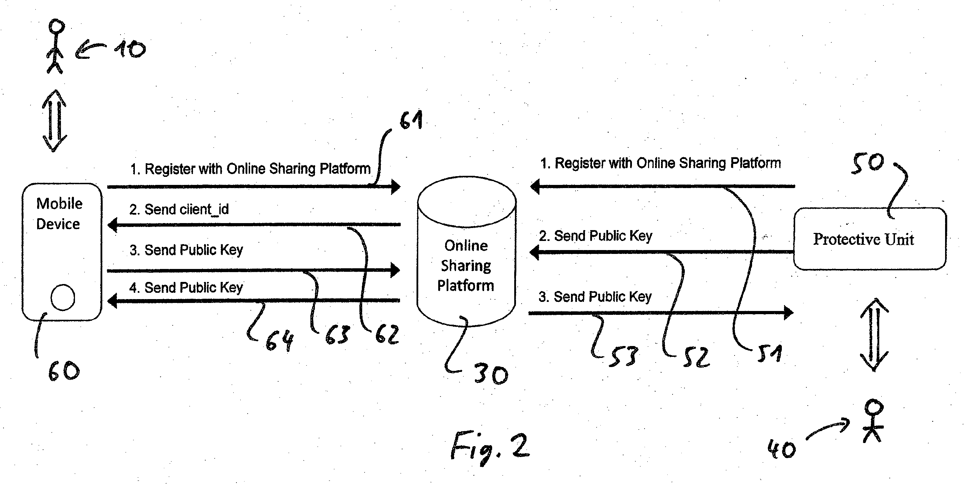

Fig. 2 shows the sharing platform 30 as a central computer system comprising several databases which are connected to partners 40 and their vehicles through an electronic unit 50 and connected to users 10 and their mobile communication devices 60.

Reference numeral 50 is related to a hardware unit to be attached to the vehicle to be registered with the platform. It is attached to the vehicle in question in a manner, that it is not possible to dislocate said hardware unit without doing substantial damage to the vehicle. In other words the device 50 comprises a piece of hardware which can be in the case of a bicycle or a motorcycle is lock which is directly connected to the chassis of the vehicle. In case of a car such a system could be attached to the wind shield as e.g. realized in Switzerland to raise the performance related heavy vehicle fee (LSVA as a German language abbreviation) or also to another important part of the vehicle which cannot easily be exchanged.

Partner 40 then activates that hardware unit 50. Initially a first pairing happens comprising basically an exchange of public keys. Furthermore the electronic control unit sends its UID for the vehicle to the vehicle so the vehicle can identify the correctness of the layer 1 message. Upon activation of the device 50, the device is registered 51 with the sharing platform 30, initially the device 50 is associated to the partner 40 as owner of the vehicle. Such registration can be provided through exchange of public keys of an asymmetric encryption scheme for later authentication. However, also other authentication schemes may be applied.

Within this registration the device 50 transmits its public key 52 to the sharing platform 30 and receives the public key 53 of the sharing platform 30 for storage in the device 50.

Then the vehicle 20, equipped with the protection unit 50, is part of the vehicle sharing pool database in the sharing platform 30. It is as such visible for users 10. The vehicle database in the sharing platform 30 comprises beside the information relating to the vehicle itself as type of vehicle, costs of use etc. also two specific changeable data entries, i.e. the position of the vehicle 20 and the schedule information for use.

The position of the vehicle 20 can preferably be retrieved from a geolocation means as a GPS system or from the mobile cell and/or WLAN-environment. In other words, the protection unit 50 of the embodiment comprises such a geolocation means and additionally a transmittal means as a mobile telephone unit to inform the system about its current position for entering in the database.

The schedule information for use mentions the days and times when the vehicle 20 is usable for users 10, i.e. can be booked. For other times, the vehicle 20 is e.g. blocked for exclusive use by the owner, i.e. the partner 40.

The transmittal of the geolocation information about the vehicle 20 is nowadays in towns even more important, since the usual parking place for a car can be quite variable in the case of so called blue zones in a town.

It might be possible, that the schedule information for bookings of use time far in the future, e.g. beyond two weeks, one month or more, maybe subject to be confirmed or can be overwritten by the partner 40 being the owner of the vehicle 20.

Beside the data of partners 40 providing vehicles 20 exchanged with the protective unit 50 in an encrypted way, there is a further database within the online sharing platform 30, the database of users 10. Users 10 are using a mobile device 60, which has to comprise a processor being able to represent an electronic token, a transmittal interface for either wireless or wire-bound communication and input means for interacting with the transmission interfaces especially of the online sharing platform 30 and access means for the vehicle 20, i.e. the protective unit 50.

The mobile device 60 will usually be a mobile phone or mobile computer, it can also be an improved smart card which could be used within the framework of a card reader of another further mobile device. The mobile device will be equipped with a so-called "mobile application" either native to the mobile device's operating system or in the form of a platform independent online application.

The user uses said mobile device' mobile application 60 to register with the online sharing platform through initial setup in a step 61 and receives back from the database a specific client id 62 which triggers the transmission 63 of the public key of the mobile device to the sharing platform 30.

Upon reception of said public key 63 the online sharing platform 30 transmits its own public key 64 to the mobile device 60. Of course both keys are stored for later use.

Returning back to Fig. 1, the procedure of a user 10 intending to use a vehicle 20 is explained. User 10 chooses in the database within the sharing platform 30 said vehicle 20 and chooses a timeslot for scheduling the vehicle 20. This is shown in Fig. 1 that the input choice 101 is entered into the mobile device 60 of the user 10 which is then transmitted as request 102 to the sharing platform database 30 which then transmits an authentication answer 103 to the mobile device 60. That authentication file comprises further information of the vehicle location which could be then directly displayed on the mobile device 60, if this device comprises a GPS or e.g. Wi-Fi/WLAN based location system.

The mobile device's 60 first security layer is the private key of the mobile device 60. The mobile device 60 checks for the presence of the correct signature of the online sharing platform database 30. Then the user 10 is prepared to fetch the vehicle 20. When he approaches the vehicle 20, i.e. he is in a range sufficient close for his mobile device 60 to communicate with the corresponding interface(s) of the protection unit 50, he gives the instruction 111 to his mobile device 60 to open the protective device 21 of the vehicle 20, which can be to open a door, a start-the-engine command or to unlock a bicycle lock. The mobile device 60 uses the remaining authentication files sent with the message 103 and transmit these e.g. as open vehicle instruction 112 to the security device 21 within the vehicle 20 which controls the control unit 50. The control unit 50 unpacks the second security layer with the private key of the unit 50 and checks for the correct signature of the online sharing platform 30. If this comparison 113 being a confirmation of authentication is positive, then the unit 50 unlocks any protective device which can simply comprise opening the car as an action 114 and allows use of said vehicle 20, represented as a stick figure.

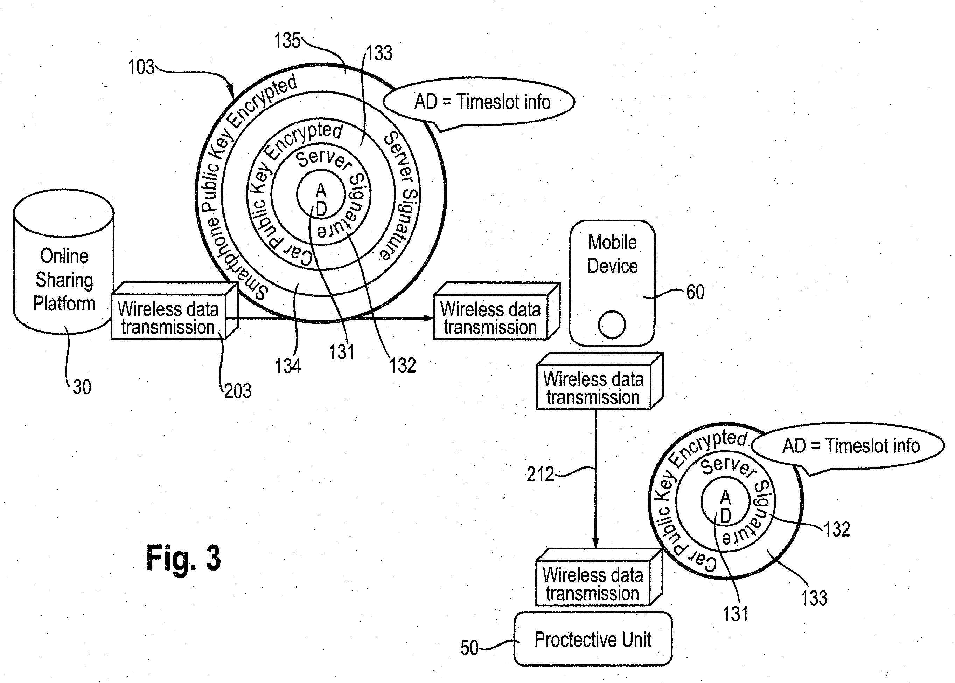

Fig. 3 shows the unfolded authentication transmission block diagram between the different electronic devices. As usual same reference numerals indicate identical features. The authentication information 103 from Fig. 1 is shown to be transmitted in a wireless way 203 from the database 30 to the mobile device 60 of the user 10. The authentication information 103 comprises an encapsulated time slot information 131 for a valid use of the vehicle 20. Said time slot information 131 is signed with the server signature 132 and encrypted with the public key 135 of the vehicle 20. Said container is signed with the server signature 134 which is then encrypted with the public key 132 of the mobile device 60. As mentioned above, the first layer of the encryption and signature is resolved by the mobile device 60 for scheduling the vehicle 20 and the second inner core is used in a further wireless transmission 212 being a wireless transmission 212 from the mobile device 60 to the protective unit 50. There, the time slot information 131, still the core of the information packet is only protected by the signature of the server 132 and the public key 133 inscription of the vehicle 20. Then, the second layer of the encryption and signature is resolved by the protective unit 50.

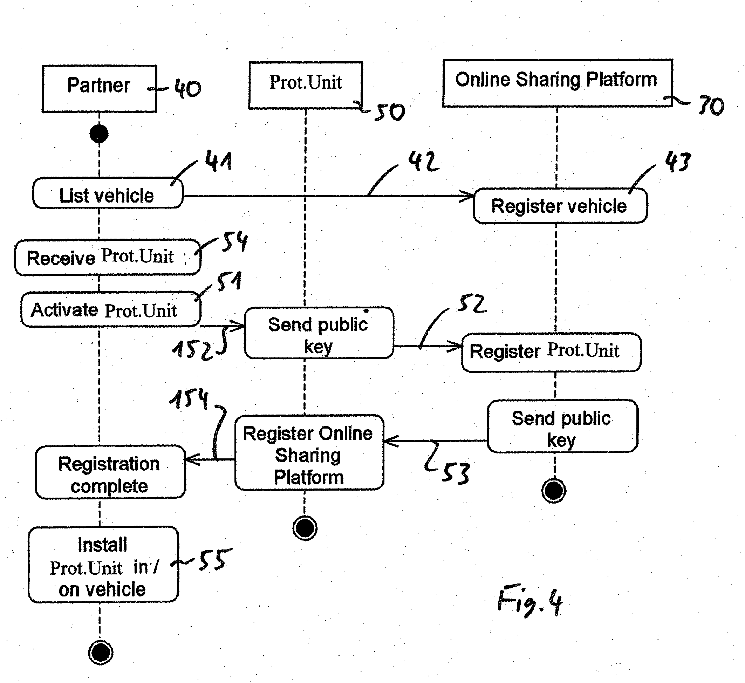

Fig. 4 shows the flow chart of the partner 40 registration, i.e. the procedure to be used by a partner 40, if he intends to register his vehicle 20 using the protection unit 50 together with the online sharing platform database 30.

As initial step the partner 40 gathers the data 41 relating to the vehicle 20 to be registered which comprises technical and commercial data, and transmits 42 this data to the online sharing platform's database 30, wherein a registered vehicle entry 43 is filled with a number of data fields of the database. Subsequently, the partner 40, who creates at this occasion or earlier his personal entry in the partner database then receives the protective unit 50 which is here referenced by the numeral 54.

In order to activate 51 the protective unit 50, the partner interacts with the protective unit 50 to initiate 152 the transmittal 52 of the public key of the vehicle 20 to the online sharing platform 30. Said public key is stored in connection with the ID of the vehicle 20 and further information received during the registration 43 of the vehicle 20. The public key of the platform 30 is then transmitted 53 to the protective unit 50 and is stored there within as shown in box 153. The completed activation is then shown 154 to the user in a registration visualization to complete this step.

The protective unit 50 is mounted 55 as mentioned above at or in the vehicle 20.

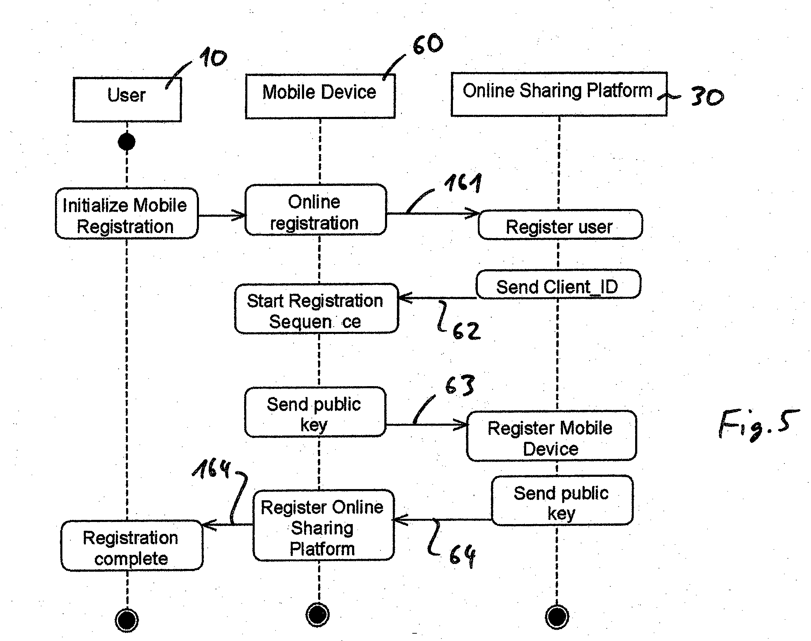

Fig. 5 shows the flow chart of the user 10 registration, i.e. the procedure to be used by a user 10, if he intends to use later on the online sharing platform database 30 in order to obtain a vehicle 20 for a predefined use time.

The user initially makes a registration of him with the online sharing platform 30 providing 161 the necessary data for identification. With registration of the user, the user 10 receives from the platform 30 a client ID in a step 62. Said client ID can then be used as such or together with e.g. a one-time-password to activate the mobile device 60 the user 10 intends to use in a corresponding step 61. The user 10 initiates the transmittal 63 of the public key of his mobile device 60 to the platform 30 where the data relating to the mobile device are stored. Based on this transmission the public key of the platform 30 is transmitted in step 64 to the mobile device 60 and shown as a registration complete signal 164 to the user 10.

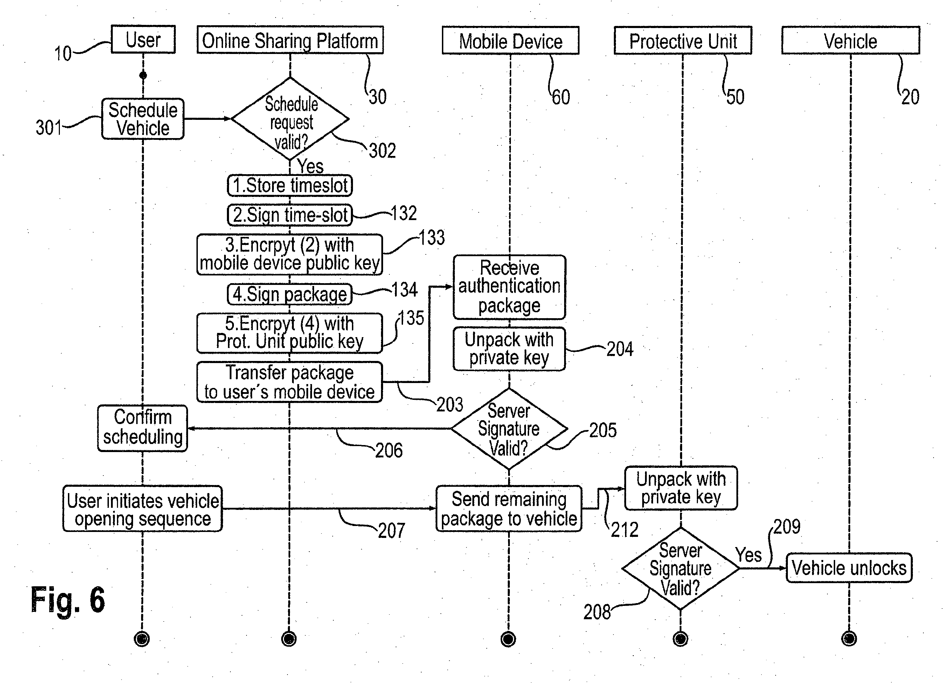

Fig. 6 shows a flow chart for the schedule of vehicles 20, involving the user 10, the platform 30, the mobile device 60 of the user 10; and the protective device 50. Fig. 6 does not show the initializing steps of one or more partners 40 allowing third people, i.e. the users 10, to obtain or rent a vehicle 20. The governing renting agreement can comprise a monetary compensation for the partner 40 being the owner of the vehicle 20 as well as for the platform 30 providing firm.

User 10 initiates a query 301 on the database of the sharing platform 30, i.e. requests to obtain a specific vehicle 20 at a given time for a predetermined time. Said request being a composition of data fields is checked 302 by a control unit within online sharing platform 30, i.e. the control unit usually being a server or client computer system, if said vehicle 20 is available. Of course, although after the check 302 the booking process is only continued when the result is positive, the control unit can comprise an algorithm providing alternative proposals for an amended request. In the end, in such a scenario, the original query 301 is replaced by an amended possible request which can be validated.

Based on the check 302, the schedule database of the platform 20 provides a new entry encompassing of the booked time slot for this vehicle. Said timeslot information 131 is then digitally signed 132 by the server of the platform 30, encrypted 133 with the public key of the protective unit 50 of the vehicle 20. This package is then digitally signed 134 again by the server of the platform 30 and finally encrypted 135 with the public key of the mobile device 60. Said package is as a whole transmitted 203 to the mobile device 60. In this respect it is possible that the initial query 301 and authentication of the user 10 is conducted via an encrypted transmission initialized by the mobile device 60 which is handled by the user 10. In other words; it is possible, that scheduling is conducted directly with the platform 30 and its controlling software or through inputs made on the mobile device 60 which are then transmitted, preferably in a secured manner, with the control unit of the sharing platform 30.

The transmitted message is unpacked using the private key of the mobile device 60 in a step 204 conducted through a control unit portion of the mobile device 60. Said control unit then checks 205 the validity of the signature of the server and confirms the scheduling information to the user 10 in a scheduling confirmation message 206 to the user 10, which can be an acoustic or optical feedback, preferably with the details of the booked vehicle.

Upon the time of the scheduled take-over of the vehicle 20, user 10 approaches the vehicle 20, e.g. guided through a GPS information relating to the position of the vehicle 20. Said position information can be transmitted within the scheduling confirmation message 206, but it can also be updated by a direct contact with the platform 30 database if further persons have used the vehicle 20 between the booking of the user and the scheduled take-over of the vehicle 20. User 10 uses the mobile device initiating the opening sequence 207 with its mobile device 60 and transmits the remaining package in a further preferably wireless transmission 212 to the protective unit 50, where said document is unpacked using the private key of the protective unit 50. Also at that stage, the unpacked transmitted message is checked in a step 208 conducted through a control unit portion of the protective device 50. Said control unit checks the validity of the signature of the server and confirms the scheduling information to the user 10 indirectly through providing an opening signal 209 to the vehicle 20, either to open the vehicle 20, open the lock blocking the vehicle 20 in place or to allow starting an engine of the vehicle. It is of course possible that the signal 209 de-blocks the start of the engine in a way that said signal as well as a user signal from the mobile device 60 are both necessary to use the vehicle.

**LIST OF REFERENCE SIGNS**

| | | | |
|---|---|---|---|
| 10 | user | 112 | open car instruction for car |
| 20 | vehicle | 113 | confirmation of instruction |
| 21 | protection against unauthorized use | 114 | open car action |
| | | 131 | time slot information |
| 30 | sharing platform | 132 | server signature |
| 40 | partner | 133 | encrypted key of mobile device |
| 41 | list vehicle | | |
| 42 | transmission of vehicle data | 134 | server signature |
| 43 | register vehicle | 135 | encrypted car key |
| 50 | protective unit | 152 | initiation key transmittal |
| 51 | register request | 153 | public key storage |
| 52 | transmittal public key vehicle | 154 | visualization of registration |
| 53 | transmittal public key platform | 161 | user registration step |
| | | 164 | visualization of registration |
| 54 | receipt of protective unit | 203 | wireless transmission |
| 55 | mounting of the unit | 204 | unpack message |
| 60 | mobile device | 205 | validity check |
| 61 | register request | 206 | scheduling confirmation |
| 62 | transmittal client id | 207 | opening sequence |
| 63 | transmittal public key client | 208 | validity check |
| 64 | transmittal public key platform | 209 | opening signal |
| | | 212 | wireless transmission |
| 101 | schedule choice | 301 | query |
| 102 | schedule request | 302 | check |
| 103 | authentication transmittal | | |
| 111 | open car instruction mobile | | |

## Claims

1. Method for sharing transportation means (20), e.g. cars, motorcycles or bicycles, among a plurality of users (10), comprising the steps of
- providing an electronic control unit (30), comprising a database of providers (40) of vehicles (20), a database of said vehicles (20) comprising database fields for a plurality of time schedule data for each vehicle (20) and a database of users (10),
- providing a plurality of protective access units (50) provided in connection with each of the vehicles (20),
- providing a plurality of mobile communication devices (60), wherein each mobile communication device (60) is associated with a user (10) from the plurality of users (10), wherein the request of a user (10) for use of one of the vehicles (20) comprises the steps
- transmitting, directly or via a mobile communication device (60), a request of said user (10) for use of one of the vehicles (20) to the electronic control unit (30),
- identifying the user (10), his mobile communication device (60), the requested vehicle (20) and the corresponding security device (21) in the databases of the electronic control unit (30),
- providing an original encapsulated message (103) to the mobile communication device (60) of the user (10) comprising timeslot information (131) for the requested time of use of the vehicle (20), wherein the original encapsulated message (103) comprises two layers of protection,
- providing a forwarded encapsulated message (212) from the mobile communication device (60) of the user (10) to the protective access unit (50) associated to said vehicle (20) comprising the timeslot information (131) for the requested time of use of the vehicle (20), **characterized in that**
the timeslot information (131) for the requested time of use of the vehicle (20) is digitally signed by the electronic control unit (30) of the system,
wherein the encapsulated message (103) is digitally signed by said electronic control unit (30),
wherein the outer layer of protection of the encapsulated message (103) is encrypted through a public key of the mobile communication device (60),
wherein, upon decoding of the outer layer of protection and of the original encapsulated message (103), the mobile communication device (60) checks the received original encapsulated message (103) whether it originates from the electronic control unit (30) of the system, and in the affirmative result, the remaining message is used as said forwarded encapsulated message (212),
wherein the layer of protection of the forwarded encapsulated message (212) is encrypted through a public key of the protective access unit (50); wherein the protective access unit (50), upon decoding of the layer of protection of the forwarded encapsulated message (212), checks the received forwarded encapsulated message (212), whether it originates from the electronic control unit (30) of the system, and in the affirmative result, opens, unlocks and/or starts the vehicle (20) for use.

2. Method according to claim 1, wherein the database of the electronic control unit (30) receives intermittently geolocation information for each vehicle (20), updated by a wireless transmittal of such information gathered through corresponding sensors in each vehicle (20).

3. System for sharing transportation means (20), e.g. vehicles as cars, motorcycles or bicycles, among a plurality of users (10), comprising:
- an electronic control unit (30), comprising a database of providers (40) of vehicles (20), a database of said vehicles (20) comprising database fields for a plurality of time schedule data for each vehicle (20) and a database of users (10),
- a plurality of protective access units (50) provided in connection with each of the vehicles (20),
- a plurality of mobile communication devices (60), wherein each mobile communication device (60) is associated with a user (10) from the plurality of users (10),
configured to execute the method according to claim 1 or 2.

4. System according to claim 3, wherein the plurality of protective access units (50) are connected each with a geolocation means within its associated transportation means (20) and a wireless transmission interface for communicating the location of the protective access unit (50) to the electronic control unit (30) for updating the database of the transportation means (20) with said current location, wherein the control unit (50) is adapted to send within or together with the original encapsulated message (103) to the mobile communication device (60) said current location from the database.

## Patentansprüche

1. Verfahren zur Nutzung von Transportmitteln (20), z.B. Autos, Motorräder oder Fahrräder, unter einer Vielzahl von Benutzern (10), aufweisend die Schritte
- Bereitstellen einer elektronischen Steuereinheit (30), aufweisend eine Datenbank von Anbietern (40) von Fahrzeugen (20), wobei eine Datenbank von besagten Fahrzeugen (20) Datenbankfelder für eine Vielzahl von Zeitplandaten für jedes Fahrzeug (20) und eine Benutzerdatenbank (10) aufweist,
- Bereitstellen einer Vielzahl von schützenden Zugriffseinheiten (50), welche in Verbindung mit jedem der Fahrzeuge (20) vorgesehen sind,
- Bereitstellen einer Vielzahl von mobilen Kommunikationsvorrichtungen (60), wobei jede mobile Kommunikationsvorrichtung (60) einem Benutzer (10) aus der Vielzahl von Benutzern (10) zugeordnet ist, wobei die Anforderung von einem Benutzer (10) zur Nutzung von einem der Fahrzeuge (20) die Schritte aufweist
- Übermitteln, direkt oder über eine mobile Kommunikationsvorrichtung (60), einer Anforderung des besagten Benutzers (10) zur Nutzung von einem der Fahrzeuge (20) an die elektronische Steuereinheit (30),
- Identifizieren des Benutzers (10), seiner mobilen Kommunikationsvorrichtung (60), des angeforderten Fahrzeugs (20) und der zugehörigen Sicherheitsvorrichtung (21) in der Datenbank der elektronischen Steuereinheit (30),
- Bereitstellen einer ursprünglichen verkapselten Nachricht (103) an die mobile Kommunikationsvorrichtung (60) des Benutzers (10), aufweisend Zeitschlitz-Informationen (131) für die angefragte Nutzungszeit des Fahrzeugs (20), wobei die ursprüngliche verkapselte Nachricht (103) zwei Schutzschichten aufweist,
- Bereitstellen einer von der mobilen Kommunikationsvorrichtung (60) des Benutzers (10) an die schützende Zugriffseinheit (50), welche besagtem Fahrzeug (20) zugeordnet ist, weitergeleiteten verkapselten Nachricht (212), welche die Zeitschlitz-Informationen (313) für die angefragte Nutzungszeit des Fahrzeugs (20) aufweist, **dadurch gekennzeichnet, dass**
die Zeitschlitz-Information (131) für die angefragte Nutzungszeit des Fahrzeugs (20) von der elektronischen Steuereinheit (30) des Systems digital unterzeichnet ist,
wobei die verkapselte Nachricht (103) von besagter elektronischer Steuereinheit (30) elektronisch unterzeichnet ist,
wobei die äussere Schutzschicht der verkapselten Nachricht (103) über einen öffentlichen Schlüssel der mobilen Kommunikationsvorrichtung (60) verschlüsselt ist, wobei, nach Entschlüsselung der äusseren Schutzschicht und der ursprünglichen verkapselten Nachricht (103), die mobile Kommunikationsvorrichtung (60) prüft, ob die empfangene ursprüngliche verkapselte Nachricht (103) von der elektronischen Steuereinheit (30) des Systems stammt, und in dem bestätigenden Ergebnis die übrigbleibende Nachricht als die besagte weitergeleitete verkapselte Nachricht (212) verwendet wird,
wobei die Schutzschicht der weitergeleiteten verkapselten Nachricht (212) durch einen öffentlichen Schlüssel der schützenden Zugriffseinheit (50) verschlüsselt ist; wobei die schützende Zugriffseinheit (50), nach Entschlüsselung der Schutzschicht der weitergeleiteten verkapselten Nachricht (212), prüft, ob die empfangene weitergeleitete verkapselte Nachricht (212) von der elektronischen Steuereinheit (30) des Systems stammt, und in dem bestätigenden Ergebnis das Fahrzeug (20) für die Nutzung öffnet, entriegelt und/oder startet.

2. Verfahren gemäss Anspruch 1, wobei die Datenbank der elektronischen Steuereinheit (30) intermittierende Geolokalisierungsinformationen für jedes Fahrzeug (20) empfängt, welche von einem drahtlosen Übermittler von solchen Informationen, die von entsprechenden Sensoren in jedem Fahrzeug (20) gesammelt werden, aktualisiert werden.

3. System zur Nutzung von Transportmitteln (20), z.B. Transportmittel wie Autos, Motorräder oder Fahrräder, unter einer Vielzahl von Benutzern (10), aufweisend:
- eine elektronische Steuereinheit (30), aufweisend eine Datenbank von Anbietern (40) von Fahrzeugen (20), wobei eine Datenbank von besagten Fahrzeugen (20) Datenbankfelder für eine Vielzahl von Zeitplandaten für jedes Fahrzeug (20) und eine Benutzerdatenbank (10) aufweist,
- eine Vielzahl von schützenden Zugriffseinheiten (50), welche in Verbindung mit jedem der Fahrzeuge (20) vorgesehen sind,
- eine Vielzahl von mobilen Kommunikationsvorrichtungen (60), wobei jede mobile Kommunikationsvorrichtung (60) einem Benutzer (10) aus der Vielzahl von Benutzern (10) zugeordnet ist,
welches dazu konfiguriert ist, das Verfahren gemäss den Ansprüchen 1 oder 2 auszuführen.

4. System gemäss Anspruch 3, wobei jede der Vielzahl der schützenden Zugriffseinheiten (50) mit einem Geolokalisierungsmittel innerhalb ihrem zugehörigen Transportmittel (20) verbunden ist und eine drahtlose Übertragungsschnittstelle zur Kommunikation des Standorts der schützenden Zugriffseinheit (50) an die elektronische Steuereinheit (30), um die Datenbank der Transportmittel (20) mit besagtem aktuellen Standort zu aktualisieren, wobei die Steuereinheit (50) dazu geeignet ist, besagten aktuellen Standort von der Datenbank innerhalb oder zusammen mit der ursprünglichen verkapselten Nachricht (103) an die mobile Kommunikationsvorrichtung (60) zu senden.

## Revendications

1. Méthode pour partager des moyens de transport (20), par exemple voitures, motos ou bicyclettes, entre une pluralité d'utilisateurs (10), comprenant les étapes de :
- prévoir une unité de contrôle électronique (30), comprenant une base de données de fournisseurs (40) de véhicules (20), une base de données desdits véhicules (20) comprenant des champs de base de données pour une pluralité de données de calendrier pour chaque véhicule (20) et une base de données d'utilisateurs (10),
- prévoir une pluralité d'unités d'accès protectrices (50) prévues en connexion avec chacun des véhicules (20),
- prévoir une pluralité de dispositifs de communication mobile (60), dans laquelle chaque dispositif de communication mobile (60) est associé à un utilisateur (10) de la pluralité d'utilisateurs (10), dans laquelle la requête d'un utilisateur (10) pour l'utilisation d'un des véhicules (20) comprend les étapes de
- transmettre, de manière directe ou à travers un dispositif de communication mobile (60), une requête dudit utilisateur (10) pour l'utilisation un des véhicules (20) à l'unité de contrôle électronique (30),
- identifier l'utilisateur (10), son dispositif de communication mobile (60), le véhicule sollicité (20) et le dispositif de sécurité correspondant (21) dans les bases de données de l'unité de contrôle électronique (30),
- fournir un message encapsulé original (103) au dispositif de communication mobile (60) de l'utilisateur (10) comprenant une information de créneau temporel (131) pour le temps d'utilisation du véhicule (20) sollicité, dans laquelle le message encapsulé original (103) comprend deux couches de protection,
- fournir un message encapsulé relayé (212) depuis le dispositif de communication mobile (60) de l'utilisateur (10) à l'unité d'accès protectrice (50) associée audit véhicule (20) comprenant l'information de créneau temporel (131) pour le temps d'utilisation du véhicule (20) sollicité, **caractérisé en ce que**
l'information de créneau temporel (131) pour le temps d'utilisation du véhicule (20) sollicité est numériquement signée par l'unité de contrôle électronique (30) du système,
dans laquelle le message encapsulé (103) est numériquement signé par ladite unité de contrôle électronique (30),
dans laquelle la couche extérieure de protection du message encapsulé (103) est encrypté à travers une clé publique du dispositif du communication mobile (60),
dans laquelle lors du décodage de la couche extérieure de protection et du message encapsulé original (103), le dispositif de communication mobile (60) vérifie si le message encapsulé original (103) reçu émane de l'unité de contrôle électronique (30) du système, et dans le cas d'un résultat affirmatif, le message restant est utilisé comme message encapsulé relié (212), dans laquelle la couche de protection du message encapsulé relayé (212) est encrypté à travers une clé publique de l'unité d'accès protectrice (50) ; dans laquelle l'unité d'accès protectrice (50), lors du décodage de la couche de protection du message encapsulé relayé (212), vérifie si le message encapsulé relayé (212) reçu émane de l'unité de contrôle électronique (30) du système et dans le cas d'un résultat affirmatif, ouvre, déverrouille et/ou démarre le véhicule (20) pour l'utilisation.

2. Méthode selon la revendication 1, dans laquelle la base de données de l'unité de contrôle électronique (30) reçoit de manière intermittente l'information de géolocation pour chaque véhicule (20), mis à jour par une transmission sans fil de telle information rassemblée à travers des capteurs correspondants dans chaque véhicule (20).

3. Système pour partager des moyens de transport (20), par exemple de véhicules comme des voitures, motos ou bicyclettes, entre une pluralité d'utilisateurs (10), comprenant:
- une unité de contrôle électronique (30), comprenant une base de données de fournisseurs (40) de véhicules (20), une base de données desdits véhicules (20) comprenant des champs de base de données pour une pluralité de données de calendrier pour chaque véhicule (20) et une base de données d'utilisateurs (10),
- une pluralité d'unités d'accès protectrices (50) pourvues en connexion avec chacun des véhicules (20),
- une pluralité de dispositifs de communication mobile (60), dans lequel chaque dispositif de communication mobile (60) est associé avec un utilisateur (10) de la pluralité des utilisateurs (10),
configuré pour exécuter la méthode selon la revendication 1 ou 2.

4. Système selon la revendication 3, dans lequel la pluralité d'unités d'accès protectrices (50) sont connectées chacune avec un moyen de géolocation dans son moyen de transportation associé (20) et avec un interface de transmission sans fil pour communiquer la location de l'unité d'accès protectrice (50) à l'unité de contrôle électronique (30) pour mettre à jour la base de données des moyens de transportation (20) avec ladite location, dans lequel l'unité de contrôle (50) est adaptée pour envoyer dans, ou ensemble avec, le message encapsulé original (103) ladite location actuelle au dispositif de communication mobile (60) à partir de la base de données.
